(19) Europäisches Patentamt

European Patent Office

Office européen des brevets

(11) EP 1 065 486 A1

(12) **EUROPÄISCHE PATENTANMELDUNG**

(43) Veröffentlichungstag:
03.01.2001 Patentblatt 2001/01

(51) Int. Cl.7: **G01K 13/00**

(21) Anmeldenummer: 00113447.7

(22) Anmeldetag: 24.06.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **28.06.1999 DE 19929503**

(71) Anmelder: **Braun GmbH**
**61476 Kronberg (DE)**

(72) Erfinder:
• **Kraus, Bernhard**
**35619 Braunfels (DE)**
• **Beerwerth, Frank**
**65594 Runkel-Ennerich (DE)**
• **Amsel, Klaus**
**61389 Schmitten (DE)**

(54) **IR-Thermometer für unterschiedliche Messorte**

(57) Es ist ein Infrarot-Thermometer und ein Temperaturberechnungsverfahren beschrieben, das für die Bestimmung der Körpertemperatur an unterschiedlichen Meßorten, beispielsweise an der Stirn oder im Ohr, geeignet ist.

Das Thermometer weist eine Einrichtung zur Befestigung eines abnehmbaren Meßkopfs auf. Es sind unterschiedliche Meßköpfe vorgesehen, die an die verschiedenen Meßorte angepaßt sind.

Fig.1

EP 1 065 486 A1

**Beschreibung**

Seit einigen Jahren werden zur Bestimmung der Körpertemperatur Infrarot-Thermometer eingesetzt. Am bekanntesten sind Infrarot-Thermometer zur Messung der Temperatur im Ohr. Ein derartiges IR-Thermometer ist aus der EP 0388463 bekannt. Es enthält einen Infrarot-Strahlungssensor, der die vom Meßort emittierte Infrarot-Strahlung mißt, und einen Umgebungstemperatursensor, der die Temperatur des Strahlungssensors mißt. Die Signale beider Sensoren werden für die Bestimmung der Körpertemperatur benötigt. Da das Ohr sehr leicht zugänglich und gleichzeitig vor äußeren Einflüssen gut geschützt ist, ist hier im Allgemeinen eine genaue Messung der Körpertemperatur möglich. Wegen des Temperaturgradienten im Ohrkanal hängt die gemessene Temperatur allerdings von der Handhabung des Thermometers ab. Problematisch ist dies insbesondere bei kleinen Kindern, bei denen die Meßspitze des Thermometers wegen ihres relativ großen Durchmessers nicht in den Ohrkanal paßt. Zusätzliche Ungenauigkeiten können durch Zerumen im Ohrkanal oder durch die Verwendung von verschmutzten Schutzkappen auftreten.

Es sind auch IR-Thermometer im Handel, die für die Temperaturbestimmung unter der Achsel oder auf der Hautoberfläche verwendbar sind. Bei Körpertemperaturmessungen unter der Achsel oder auf der Stirn oder im Bereich der Schläfe ergeben sich jedoch oft Meßungenauigkeiten durch äußere Einflüsse. Klinische Untersuchungen zeigen hier größere Differenzen zur oralen oder rektalen Messung als die Temperaturmessung im Ohr.

Ein unter der Bezeichnung "National DM-T2S" bzw. "DM-T2A" vertriebenes Infrarot-Thermometer weist mehrere abnehmbare Meßspitzen auf, die unterschiedliche Außendurchmesser besitzen. Das Thermometer weist daher lediglich eine Strahlungseintrittsöffnung und eine Einrichtung zur Befestigung der Meßspitzen auf, sodaß vor einer Temperaturmessung erst die geeignete Meßspitze zu wählen ist.

Es ist Aufgabe der vorliegenden Erfindung ein Infrarot-Strahlungsthermometer und ein Verfahren anzugeben, das die Bestimmung der Körpertemperatur aus Messungen an verschiedenen Körperstellen erlaubt.

Bei der vorliegenden Erfindung handelt es sich um ein Infrarotthermometer, das für die Bestimmung der Körpertemperatur an unterschiedlichen Meßorten - beispielsweise Ohr, Mund, Stirn, Haut, Schläfe, Rektum oder Achsel - geeignet ist. Im Gegensatz zu Kontaktthermometern für orale, rektale oder axillare Messung ist beim IR-Thermometer allerdings eine spezielle Anpassung an die verschiedenen Meßorte notwendig. Für die Messung im Ohr ist eine Meßspitze notwendig, die an den Ohrdurchmesser angepaßt ist. Weiterhin ist in diesem Fall die Verwendung von Schutzkappen vorteilhaft.

Für Messungen auf der Hautoberfläche, z. B. auf der Stirn oder auf der Schläfe, sind Mittel vorteilhaft, um Fehler durch. Reflektion von IR-Strahlung auf der Hautoberfläche zu minimieren. Eine Möglichkeit ist die Abschirmung des Meßortes und die Zurückreflektion von IR-Strahlung durch einen entsprechend geformten Spiegel. Es kann jedoch auf den Spiegel verzichtet werden, wenn die Meßstelle durch den Meßkopf so abgeschirmt wird, daß der von der Haut reflektierte Strahlungsanteil, nicht aus der Umgebung, sondern vom Meßkopf selber stammt. Mittels der bekannten Meßkopftemperatur läßt sich dann die gemessene Strahlungstemperatur entsprechend korrigieren. Während einer Messung auf der Stirn oder Schläfe ist es sinnvoll, einen größeren Bereich zu "scannen", d.h. das Thermometer über die Hautoberfläche zu bewegen, und den dabei gemessenen maximalen Temperaturwert zur Weiterberechnung der Körpertemperatur zu verwenden. Eine Schutzkappe ist für solche Messungen auf der Haut nicht unbedingt notwendig.

Ein erfindungsgemäßes Thermometer weist in an sich bekannter Weise einen Infrarot-Strahlungssensor und einen Umgebungstemperatursensor auf. Beim erfindungsgemäßen Verfahren wird die vom Thermometer angezeigte Körpertemperatur T in Abhängigkeit von der gemessenen Umgebungstemperatur Ta, die insbesondere auf die Hauttemperatur einen starken Einfluß hat, der durch Strahlungsmessung in an sich bekannter Weise aus den Signalen des Umgebungstemperatursensors und des Strahlungssensors bestimmten Temperatur Tb und bereits bei der Kalibrierung des Thermometers bestimmten Parametern berechnet. Um die an verschiedenen Körperstellen gemessenen Temperaturen richtig vergleichen zu können, ist es angebracht, über eine entsprechende Rechnung ein Oral-, Rektal- oder Kerntemperaturäquivalent anzugeben. Die Körpertemperatur T wird beispielsweise gemäß der unten stehenden Formel berechnet, in der d0, d1, d2, d3 und d4 die genannten Parameter sind. Durch diese Formel läßt sich beispielsweise auch der von der Haut reflektierte Strahlungsanteil berücksichtigen. Durch die Parameter d3 und d4 kann der nichtlineare Einfluß der Körpertemperatur auf die Hauttemperatur oder die Temperatur im Ohrkanal berücksichtigt werden. Dies ist deshalb vorteilhaft, weil bei einer Person mit hohem Fieber wegen der dann verbesserten Durchblutung die Oberflächentemperatur des Körpers nicht mehr so stark von der Umgebungstemperatur abhängt als bei einer fieberfreien Person:

$$T = Tb + d0 + d1(Tb-Ta) + d2(Tb-Ta)^2 + d3(Tb-Ta)(d4-Tb).$$

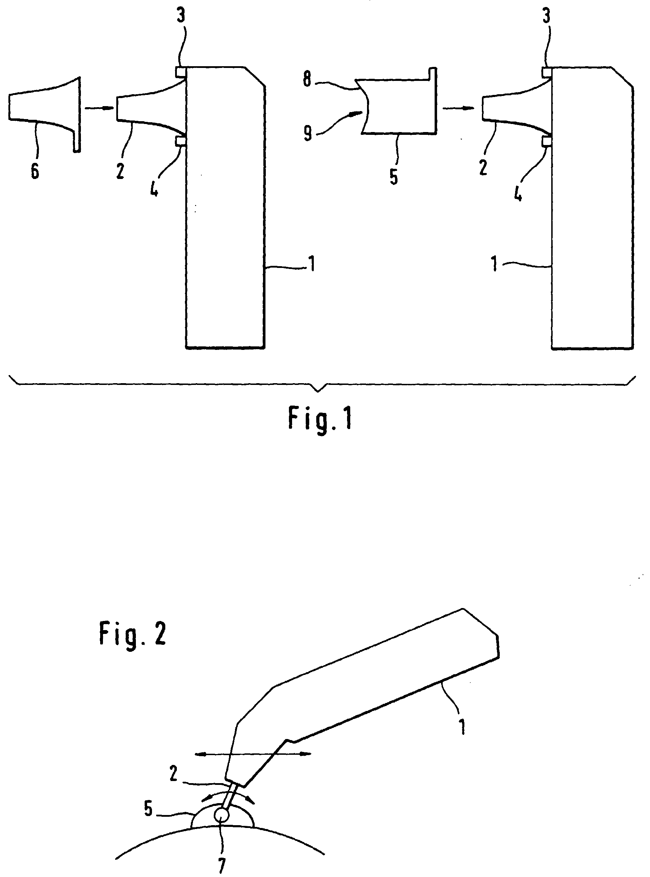

Eine erste Ausführung eines erfindungsgemäßen Infrarot-Thermometers ist in Abb. 1 schematisch dargestellt. Es handelt sich um ein Thermometer 1 mit einer für eine Messung im Ohr ausgestalteten Meßspitze 2, an der zur Messung auf der Stirn ein entsprechend geformter Meßkopf 5 befestigt werden kann. Dabei wird ein erster Schalter 3 betätigt, durch den das Temperaturberechnungsverfahren bzw. einige Parameter von Ohr- auf Stirnmessung umgeschaltet werden. Weiterhin wird die Meßdauer von beispielsweise einer Sekunde auf fünf Sekunden erhöht, so daß der Benutzer genügend Zeit hat, das Thermometer über die Stirn/Schläfe zu bewegen. Das Thermometer zeigt vorteilhafterweise die maximal gemessene Temperatur an.

Wahlweise kann auf die Meßspitze 2 des Infrarot-Thermometers 1 eine Schutzkappe 6 für Messungen im Ohr, der Meßkopf 5 für Messungen auf der Stirn oder zuerst die Schutzkappe 6 und darüber auch der Meßkopf 5 aufgesetzt werden. Ein zweiter Schalter 4 detektiert, ob eine Schutzkappe 6 aufgesetzt ist oder nicht. Das Meßverfahren und die zur Auswertung benutzten Parameter werden durch den ersten und zweiten Schalter entsprechend umgeschaltet. Statt zweier Schalter kann auch ein zweistufiger Schalter vorhanden sein.

Bei einer zweiten Ausführung eines erfindungsgemäßen Infrarot-Thermometers ist in an sich bekannter Weise das Thermometer mit einer Strahlungseintrittsöffnung und einer Befestigungseinrichtung versehen. An der Befestigungseinrichtung kann jedoch nicht nur eine Meßspitze zur Temperaturmessung im Ohrkanal sondern auch ein Meßkopf 5 zur Temperaturmessung an vergleichsweise großflächigen Hautoberflächen befestigt werden.

Bei beiden Ausführungen weist der Meßkopf 5 eine Öffnung auf, durch die Infrarot-Strahlung vom Meßort zur Strahlungseintrittsöffnung des Thermometers gelangen kann. Um Verschmutzungen der Strahlungseintrittsöffnung zu vermeiden, kann die Öffnung des Meßkopfs 5 durch ein für Infrarotstrahlung durchlässiges Fenster 9 geschlossen sein. Die dem Meßort gegenüberliegende Fläche 8 des Meßkopfs 5 für eine Temperaturmessung auf der Stirn hat vorzugsweise eine trichterförmige Gestalt, damit die Messung nicht durch Infrarot-Strahlung verfälscht wird, die aus der Umgebung stammt und von der Haut ins Thermometer reflektiert wird.

Das hier beschriebene Thermometer hat folgende besonders vorteilhafte Eigenschaften:

- Das Thermometer kann zur Körpertemperaturbestimmung an unterschiedlichen Meßorten eingesetzt werden, z. B. im Ohr, auf der Stirn oder auf der Schläfe.
- Die Meßspitzen bzw. Meßköpfe sind optimal an die verschiedenen Meßorte angepaßt.
- Durch den Wechsel der Meßspitze bzw. des Meßkopfs werden automatisch auch die Parameter für das Verfahren zur Berechnung der Körpertemperatur umgeschaltet.

Bei der genauen Bestimmung der Hauttemperatur ist es wichtig, daß auch beim scannen über die Haut sichergestellt sein muß, daß keine Strahlung aus der Umgebung ins Thermometer reflektiert werden kann. Ferner muß der vom Thermometer erfaßte Meßfleck möglichst klein sein und eine konstante Größe haben, wenn eine gute und gleichmäßige örtliche Temperaturauflösung erreicht werden soll. Daher muß der Abstand des Thermometers zur Haut und der Winkel zwischen Haut und Thermometer während der Messung konstant gehalten werden. Beide Forderungen lassen sich durch einen beweglichen Meßkopf erfüllen, der während der Messung immer an der Haut anliegt. Beim Bewegen des Thermometers folgt der Meßkopf 5 der Krümmung der Hautoberfläche, auch wenn sich der Winkel zwischen Thermometer 1 und der Hautoberfläche ändert.

In Abb. 2 ist ein solches Thermometer schematisch dargestellt. Der Meßkopf 5 ist über ein Gelenk 7 mit der Meßspitze 2 des IR-Thermometers 1 verbunden. Der IR-Sensor im IR-Thermometer erfaßt einen kleinen Meßfleck auf der Haut. Die IR-Strahlung wird durch eine entsprechende Optik (IR-Faser, Metall-Rohr, Spiegel, Linsen) zum Sensor geleitet. Der halbkugelförmige Meßkopf 5 verhindert das Eindringen von IR-Strahlung aus der Umgebung und hält gleichzeitig den Abstand zwischen Sensor und Haut konstant. Durch Abnehmen des beweglichen Meßkopfs 5 (und evtl. Aufsetzen eines anderen Meßkopfs) läßt sich das Hautthermometer in ein Ohrthermometer verwandeln.

Bei einer in den Figuren nicht dargestellten Ausführung eines erfindungsgemäßen Infrarot-Thermometers ist die Meßspitze 2 schwenkbar am IR-Thermometer befestigt.

**Patentansprüche**

1. Infrarot-Thermometer mit einem Infrarotsensor und einer Meßspitze, die eine Strahleneintrittsöffnung aufweist, durch die Infrarot-Strahlung von einem Meßort zum Infrarot-Sensor gelangen kann,
   **dadurch gekennzeichnet**,
   daß es zusätzlich einen Meßkopf (5) aufweist, der auf die Meßspitze (2) aufsetzbar ist.

2. Infrarot-Thermometer mit einem Infrarotsensor und einer Strahlungseintrittsöffnung, durch die Infrarot-Strahlung von einem Meßort zum Infrarot-Sensor gelangen kann,
   **dadurch gekennzeichnet**,
   daß es eine Meßspitze (2) und/oder einen Meßkopf (5) aufweist, die am Thermometer (1) abnehmbar befestigbar sind/ist.

3. Infrarot-Thermometer nach Anspruch 1 oder 2,
   **dadurch gekennzeichnet**,

daß der Meßkopf (5) und/oder die Meßspitze (2) in mindestens einer Raumebene schwenkbar sind/ist.

4. Infrarot-Thermometer nach Anspruch 1, 2 oder 3,
**dadurch gekennzeichnet**,
daß das IR-Thermometer einen ersten Schalter (3) aufweist, der beim Aufsetzen eines Meßkopfs (5) betätigbar ist, und daß die Berechnung eines Temperaturanzeigewerts aus den Temperaturmeßwerten durch die Betätigung des ersten Schalters (3) beeinflußt wird.

5. Infrarot-Thermometer nach Anspruch 1 oder 2,
**dadurch gekennzeichnet**,
daß das IR-Thermometer einen zweiten Schalter (4) aufweist, der beim Aufsetzen einer Schutzkappe (6) auf die Meßspitze (2) betätigbar ist, und daß die Berechnung eines Temperaturanzeigewerts aus den Temperaturmeßwerten durch die Betätigung des zweiten Schalters (4) beeinflußt wird.

6. Infrarot-Thermometer nach Anspruch 1 oder 2,
**dadurch gekennzeichnet**,
daß der Meßkopf (5) eine Öffnung für Infrarot-Strahlung aufweist.

7. Infrarot-Thermometer nach Anspruch 6,
**dadurch gekennzeichnet**,
daß die geometrische Form des Meßkopfs (5) so gewählt ist, däß der Meßort gegen aus der Umgebung stammende Infrarot-Strahlung abgeschirmt ist.

8. Infrarot-Thermometer nach Anspruch 7,
**dadurch gekennzeichnet**,
daß die bei einer Temperaturmessung dem Meßort gegenüberliegende Fläche (8) des Meßkopfs (5) eine trichterförmige Gestalt hat.

9. Infrarot-Thermometer nach Anspruch 6,
**dadurch gekennzeichnet**,
daß die Öffnung des Meßkopfs (5) durch ein für Infrarotstrahlung durchlässiges Fenster (9) geschlossen ist.

10. Verfahren zur Berechnung einer Körpertemperatur (T) aus mindestens einem Parameter (d0; d1; d2; d3; d4), einer durch Strahlungsmessung bestimmten Hauttemperatur (Tb) und einer Umgebungstemperatur (Ta),
**dadurch gekennzeichnet**,
daß die Körpertemperatur gemäß der folgenden Formel berechnet wird:

$$T = Tb + d0 + d1(Tb-Ta) + d2(Tb-Ta)^2 + d3(Tb-Ta)(d4-Tb).$$

11. Verfahren nach Anspruch 10,
**dadurch gekennzeichnet**,
daß die Strahlungsmessung mit einem Infrarot-Thermometer durchgeführt wird, und die Parameter (d0; d1; d2; d3; d4) bei der Kalibrierung des Infrarot-Thermometers bestimmt werden.

12. Verfahren nach Anspruch 10 oder 11,
**dadurch gekennzeichnet**, daß mindestens einer der Parameter (d3; d4) den nichtlinearen Einfluß der Körpertemperatur auf die Hauttemperatur berücksichtigt.

Fig.1

Fig. 2

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 593 415 A (CITIZEN WATCH CO LTD) 20. April 1994 (1994-04-20) * Abbildungen 7-9 * --- | 1,3,10, 11 | G01K13/00 |
| A | EP 0 411 121 A (NIPPON STEEL CORP) 6. Februar 1991 (1991-02-06) * Spalte 15, Zeile 6 - Zeile 14; Abbildungen * --- | 1,3 | |
| A | EP 0 588 631 A (TERUMO CORP) 23. März 1994 (1994-03-23) * Abbildung 5 * ----- | 1,3 | |

RECHERCHIERTE SACHGEBIETE (Int.Cl.7)

G01K

Der vorliegende Recherchenbericht wurde für alle Patentansprüche erstellt

| Recherchenort | Abschlußdatum der Recherche | Prüfer |
|---|---|---|
| DEN HAAG | 29. August 2000 | Ramboer, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 11 3447

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2000

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0593415 | A | 20-04-1994 | JP | 2028524 | A | 30-01-1990 |
| | | | JP | 2826337 | B | 18-11-1998 |
| | | | EP | 0593414 | A | 20-04-1994 |
| | | | DE | 68916832 | D | 25-08-1994 |
| | | | DE | 68916832 | T | 23-02-1995 |
| | | | DE | 68928305 | D | 09-10-1997 |
| | | | DE | 68928305 | T | 09-04-1998 |
| | | | DE | 68928306 | D | 09-10-1997 |
| | | | DE | 68928306 | T | 09-04-1998 |
| | | | EP | 0337724 | A | 18-10-1989 |
| | | | EP | 0777114 | A | 04-06-1997 |
| | | | HK | 27195 | A | 10-03-1995 |
| | | | SG | 22495 | G | 18-08-1995 |
| | | | US | 4932789 | A | 12-06-1990 |
| | | | US | 5024533 | A | 18-06-1991 |
| | | | US | RE34507 | E | 11-01-1994 |
| | | | US | 5232284 | A | 03-08-1993 |
| | | | JP | 8254466 | A | 01-10-1996 |
| | | | JP | 2813331 | B | 22-10-1998 |
| | | | JP | 8254467 | A | 01-10-1996 |
| EP 0411121 | A | 06-02-1991 | WO | 8906348 | A | 13-07-1989 |
| | | | JP | 8016629 | B | 21-02-1996 |
| | | | US | 5017018 | A | 21-05-1991 |
| EP 0588631 | A | 23-03-1994 | JP | 6090910 | A | 05-04-1994 |
| | | | US | 5458121 | A | 17-10-1995 |

EPO FORM P0461